# EUROPEAN PATENT SPECIFICATION

(11) **EP 1 253 361 B1**
(45) Date of publication and mention of the grant of the patent: **28.09.2005**
(21) Application number: 02253018.2
(22) Date of filing: 29.04.2002
(51) Int. Cl.: F16K 11/048

(54) **Diverter valve**
Umschaltventil
Soupape de dérivation

(30) Priority: 27.04.2001 GB 0110425; 27.03.2002 GB 0207271
(43) Date of publication of application: 30.10.2002
(73) Proprietor: AVILION LIMITED, Rainham, Essex RM13 8UB (GB)
(72) Inventor: Perrin, Robert Brian, Hornchurch RM12 4QR, Essex (GB)
(74) Representative: Luckhurst, Anthony Henry William

(56) References cited:
- EP-A- 0 775 860
- US-A- 4 609 006
- US-A- 5 417 348
- US-A- 5 752 541
- US-A- 5 778 921
- US-A- 5 881 754

## Description

This invention relates to valve structures and more particularly to a diverter valve that incorporates an improved closure mechanism and antiknocking mechanism.

Diverter valves are commonly used in water tap or faucet assemblies to divert water between a spout and a hand spray. When the spray is operated, the diverter valve shuts off the flow of water to the spout. When the spray is shut off, the diverter valve automatically adjusts to allow water to flow from the spout again. Such systems are particularly used in domestic environments, as well as commercial establishments.

A common method of implementing this automatic diverter system is by means of a piston mechanism. The valve comprises a housing containing a valve member shaped to act as a piston. The valve member is movable from a first position, in which the outlet to the spout is open, to a second position, in which the outlet to the spout is closed off. The piston is responsive to a difference in pressure between the spray outlet and the inlet, so that when the spray is open, the piston moves to close off the spout. Additionally, such a valve may comprise both hot and cold water inlets, such that mixing of the hot and cold water occurs. For example, Moen (US2,949,933) describes a hot and cold water mixing valve, which can also automatically divert the mixed water from a principle outlet passage to an auxiliary outlet passage when a control valve on the auxiliary passage is opened.

US-A-5 752 541, US-A-5 778 921, US-A-5 881 754 and EP-A-0 775 860 describe various diverter valve constructions.

However, a problem with existing diverter valves is that they only operate over a limited pressure range. At high pressures, leakage tends to occur. At low pressures, there is not enough force to close the seal on the spout properly, again resulting in leakage.

Another problem is the tendency for knocking to occur. Knocking is when a valve member is quickly moved from one position to the second position and rebounds back, thereby producing an audible hammering effect in the water line. It can be sufficiently loud as to make someone using the spray/spout system to believe that there is something seriously wrong with it. In US4,577,653 (Masco Corporation), a new design of valve is described, which is intended to reduce knocking of the valve member in the housing. This is achieved largely by prongs at the bottom of the upper housing part which bear on the conical mid-portion of the valve member. However, the design of Masco's valve is extremely complicated. The present invention aims both to improve substantially on the pressure range over which the valve will operate, and to reduce the amount of knocking which occurs, based on a design which is fairly straightforward and easy to construct.

US-A-4 609 006 on which the preamble to claim 1 is based describes a diverter valve with a flow regulator.

The present invention provides a diverter valve as set forth in claim 1.

Preferably, the piston means comprises a first piston at the bottom end of the valve element, and a second piston at the top end of the valve element. The first piston has a larger effective cross section than the second piston, resulting in the fluid in the chamber exerting a larger force on the first piston than on the second piston. Preferably, the fluid channelling means comprises one or more channels running through the length of the first piston. Preferably, the diverter valve also includes leakage prevention means for preventing fluid leakage from the second outlet by any other route than through the flow regulator. Preferably, the leakage prevention means comprises an inverted flexible cup washer, such as of rubber or other suitable polymer material. Preferably, the diverter valve comprises a second inlet, such that hot water enters via the first inlet, and cold water enters via the second inlet, and the hot and cold water mix inside the housing. The hot and cold water may enter the valve independently, or they may partially mix beforehand in a mixing chamber outside the housing.

The first outlet may be connected to a spout, and the second outlet may be connected to a spray. The housing of the valve may be integral with the spout, may be attached to the spout (for example, by welding or soldering) or may be separate from the spout. Having the housing fixed to the spout has the advantage that there are fewer parts to put together during assembly or repair of a tap system which utilises the diverter valve. If the housing was integral with the spout, they could be manufactured as a single item.

It is also possible to have a separate channel by which filtered water can pass through to the spout, but not to the spray. This would be useful to provide drinking water from the same spout as is used for hot/cold water in a sink.

The preferred embodiments of the present invention will now be described by way of example with reference to the accompanying drawings, in which:
Figure 1 shows a perspective view of a prior art design of diverter valve;
Figure 2 shows a sectional view of the valve of figure 1, located within an outer body;
Figure 3 shows a perspective view of the diverter valve according to a first embodiment of the invention;
Figure 4A shows a side view of the valve of figure 3. Figure 4B gives a sectional view along line A-A of figure 4A;
Figures 5A and 5B give a more detailed view of channels running through a lower piston element in the valve of figure 3. Figure 5A shows a bottom view and figure 5B shows a side view;
Figures 6A to 6C show a flow regulator. Figure 6A gives a bottom view, Figure 6B is a cross-section along line A-A of Figure 6A, and Figure 6C shows the fitting mechanism of the flow regulator in more detail;
Figure 7 is an exploded perspective view of a second embodiment of the present invention;
Figures 8A to 8E show a detailed view of a valve member of the second embodiment;

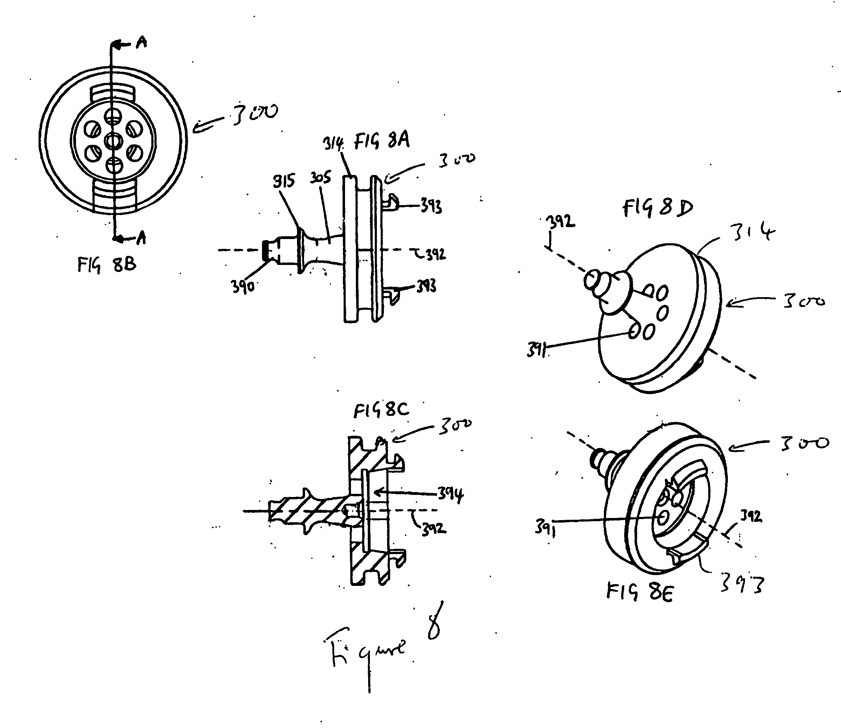

Figure 8A is a side view; Figure 8B is an underneath view; Figure 8C is a cross section through line A-A of Figure 8C; Figure 8D is a perspective view from above and Figure 8E is a perspective view from below.

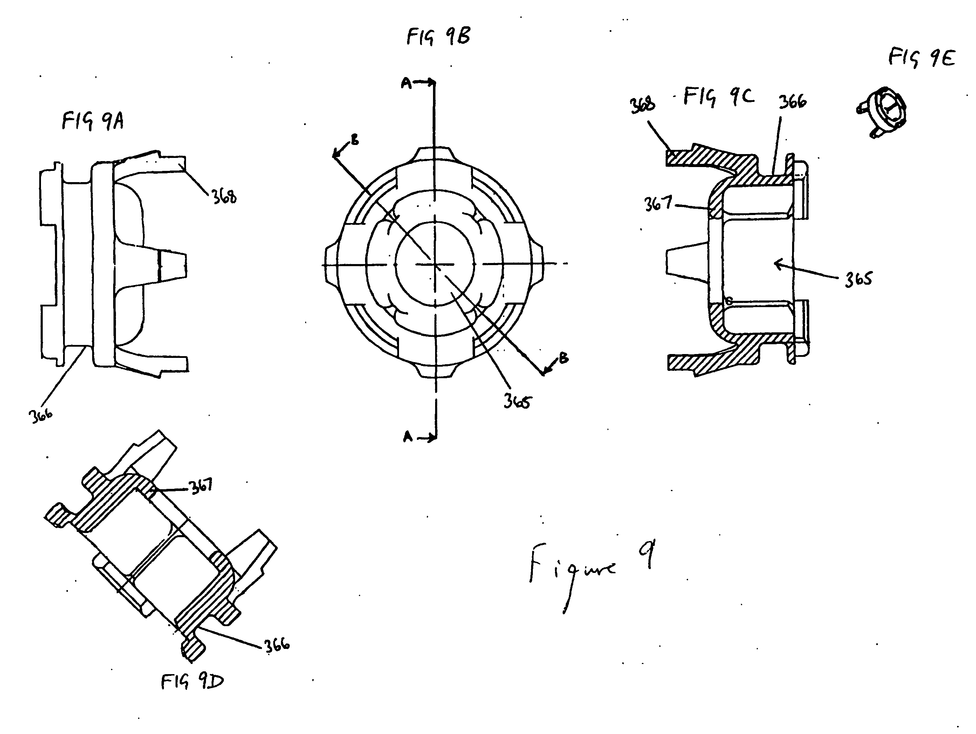

Figures 9A to 9E show a detailed view of an upper valve housing of the second embodiment. Figure 9A is a side view, Figure 9B is a top view, Figure 9C is a cross sectional view along line A-A of Figure 9B, Figure 9D is a cross sectional view along line B-B of Figure 9B, and Figure 9E is a perspective view from above;

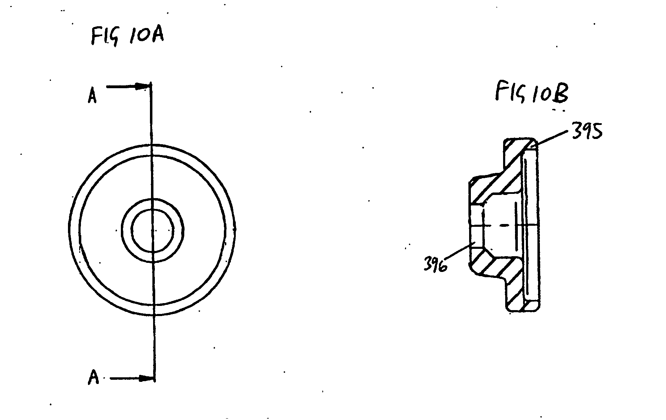

Figures 10A to 10B show a detailed view of the guide plate of the second embodiment. Figure 10A is a base view and Figure 10B is a cross sectional view along line A-A of Figure 10A;

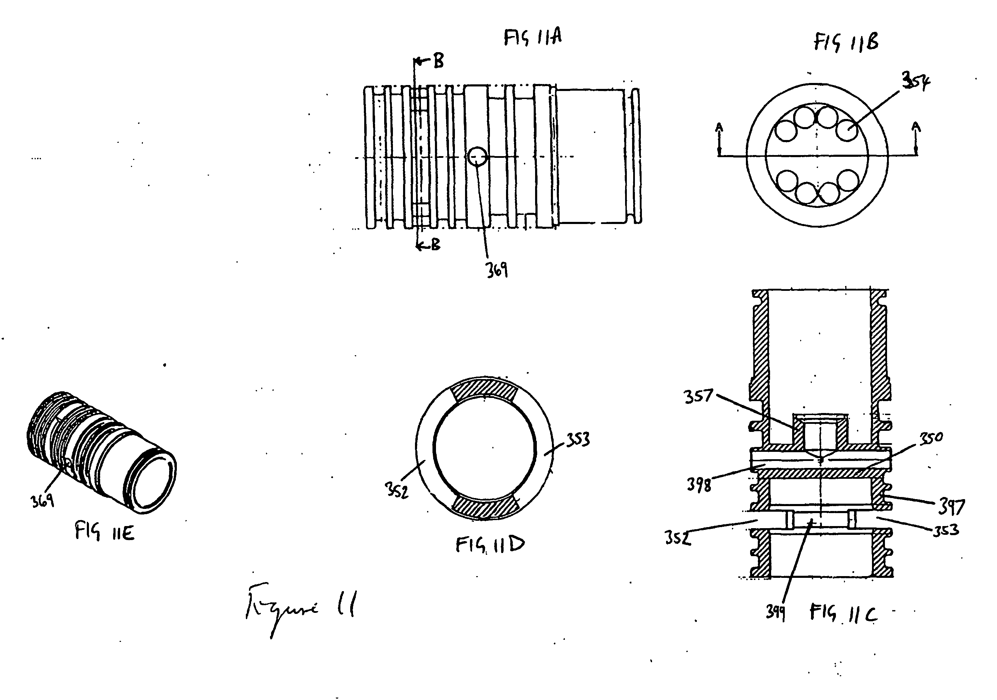

Figures 11A to 11E show a detailed view of an outer housing of the second embodiment. Figure 11A shows a side view, Figure 11B shows a top view, Figure 11C shows a cross section through line A-A of Figure 11B, Figure 11D shows a cross sectional view through line B-B of Figure 11A, and Figure 11E shows a side perspective view;

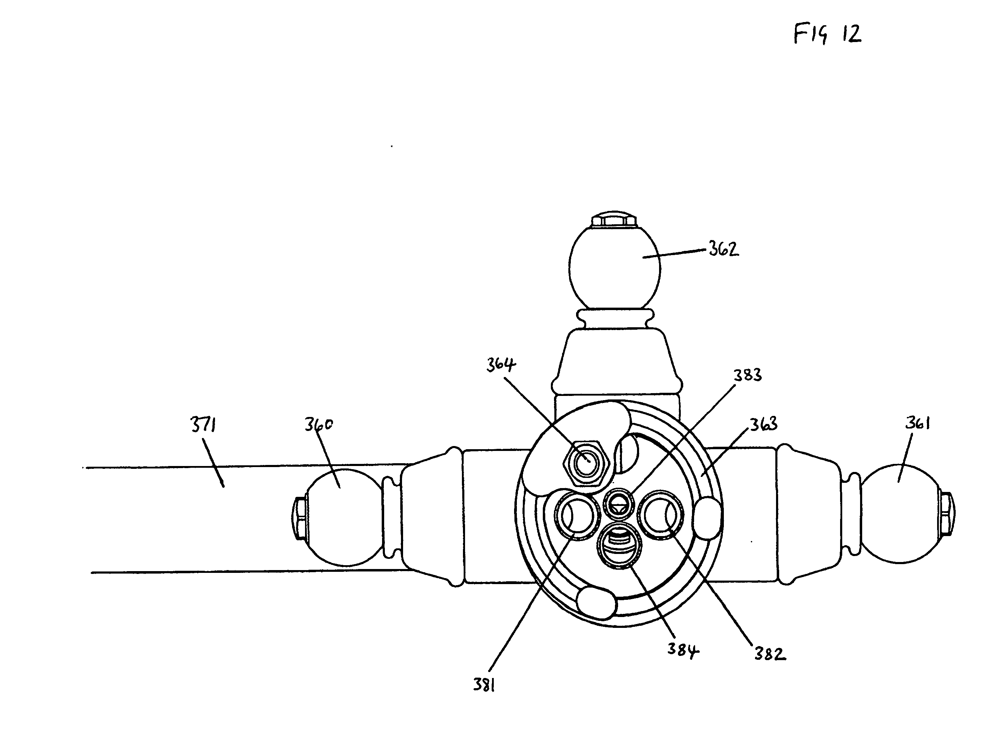

Figure 12 shows a base view of the faucet assembly incorporating the second embodiment;

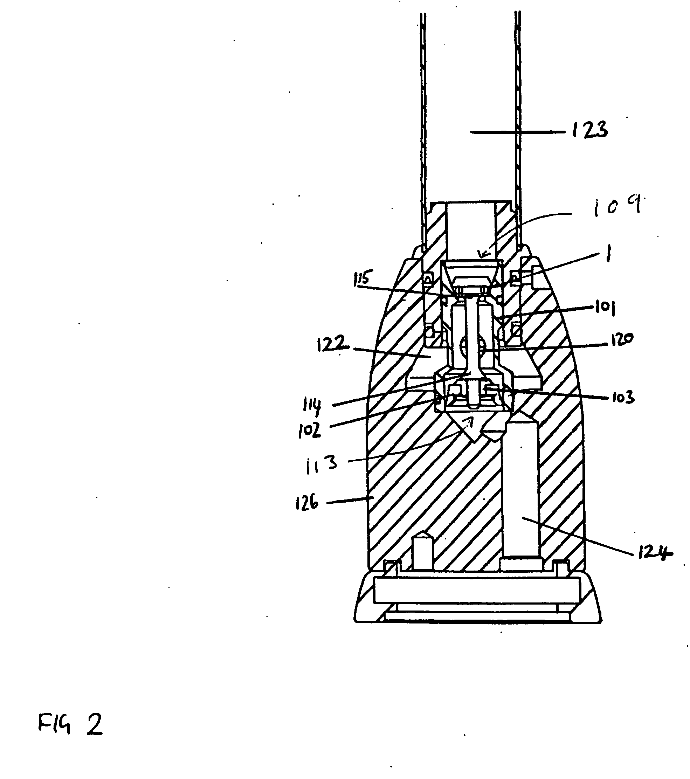

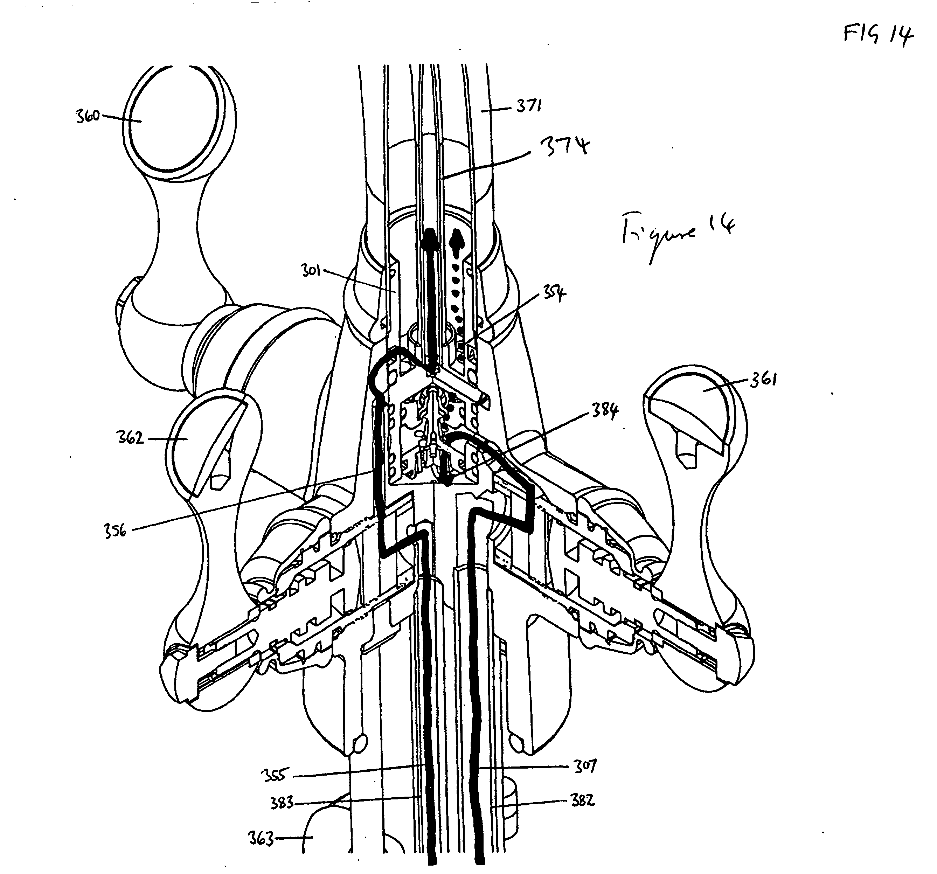

Figures 13A to 13G show details of the faucet assembly of Figure 2 . Figure 13A shows a front view, Figure 13B shows a side view, Figure 13C shows a cross section through line A-A of Figure 13B, Figure 13D shows a cross section through line B-B of Figure 13A, Figure 13E shows a cross section through line C-C of Figure 13A, Figure 13F shows a cross sectional view through line D-D of Figure 13B, and Figure 13G shows a base view;

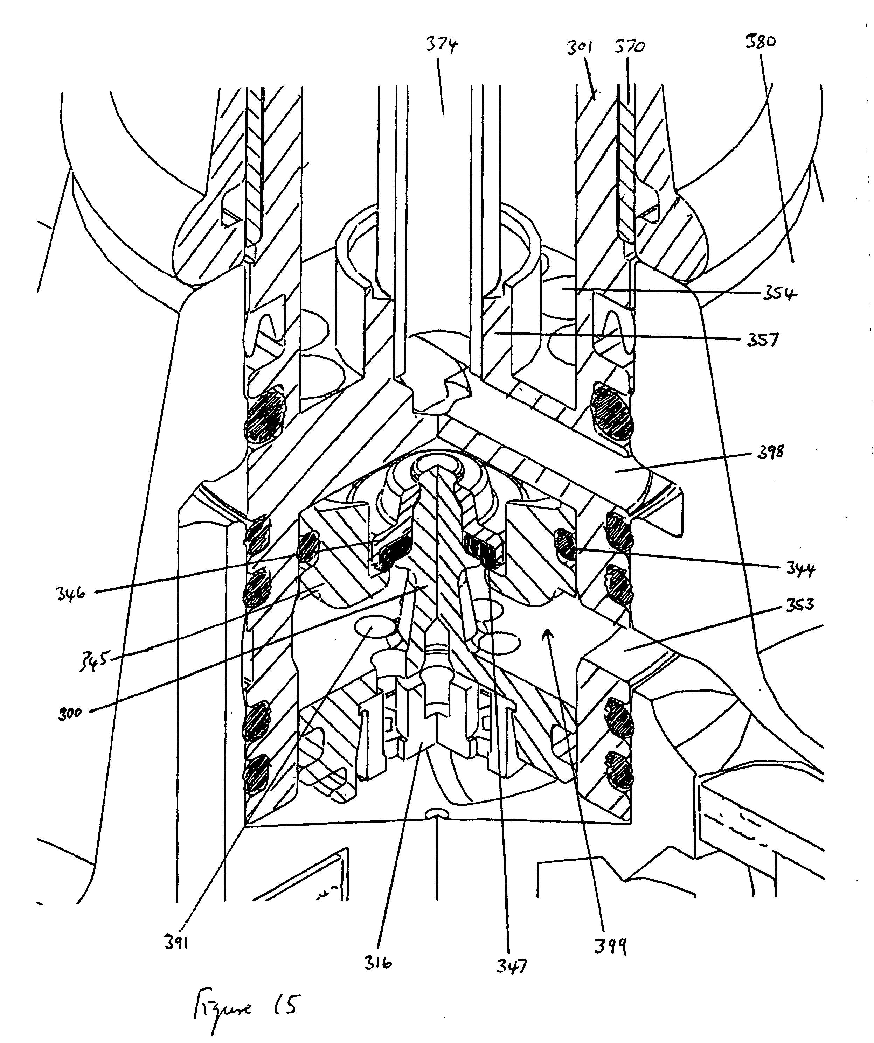

Figure 14 shows a perspective view of the spout and valve assembly when fixed inside the faucet assembly, according to the second embodiment of the invention.;
Figure 15 shows an enlarged view of the valve assembly of Figure 14;

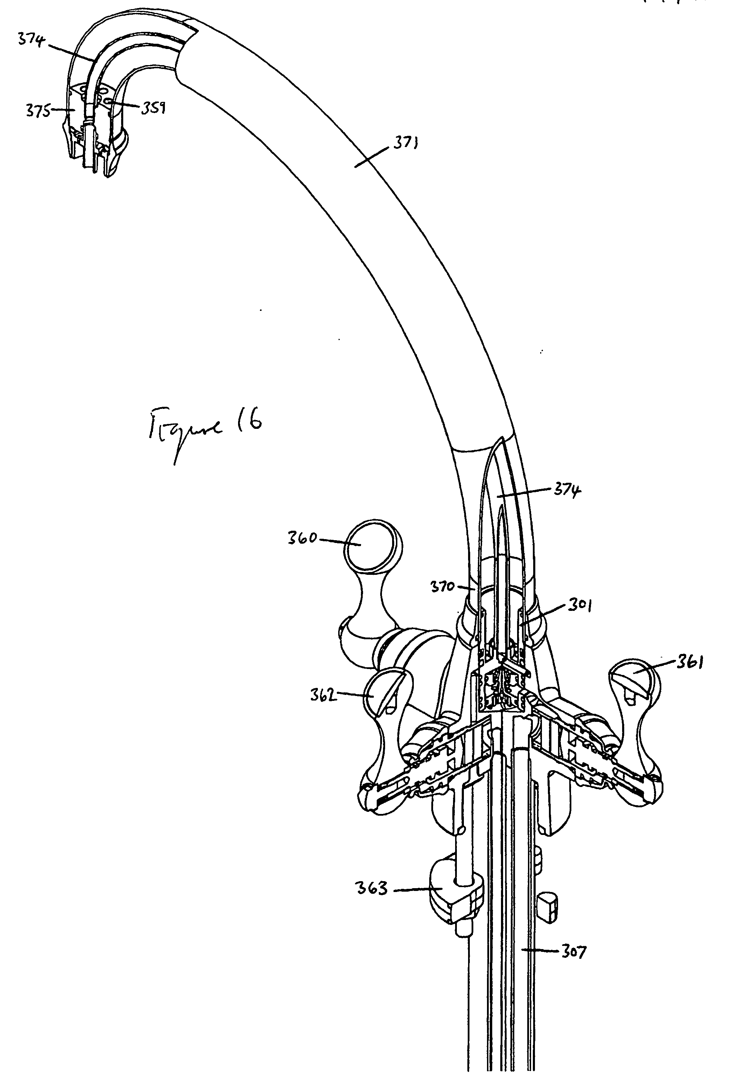

Figure 16 shows a perspective view of the faucet assembly and spout of the second embodiment;

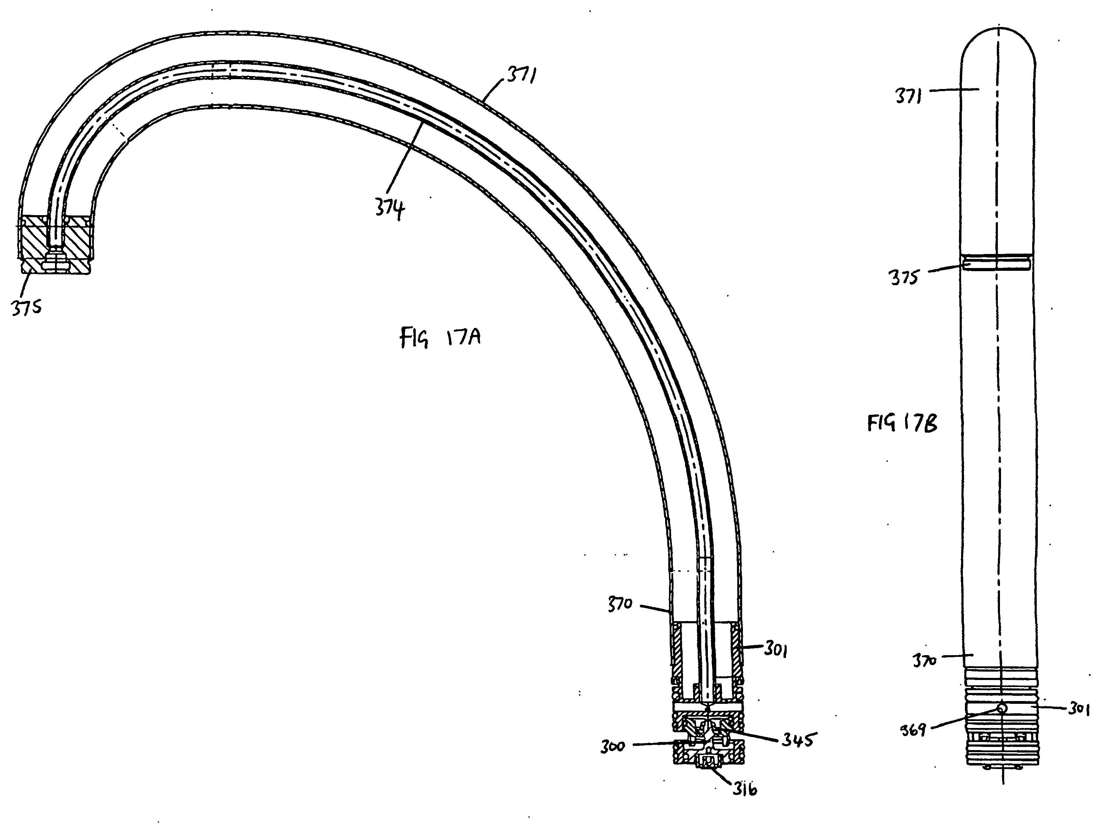

Figure 17A shows a side view of the spout and figure 17B shows a front view of the spout of the second embodiment;
Figure 18A shows a base view of the end-cap of the spout of Figure 17, and Figure 18B shows a cross sectional view along line A-A of Figure 18A;

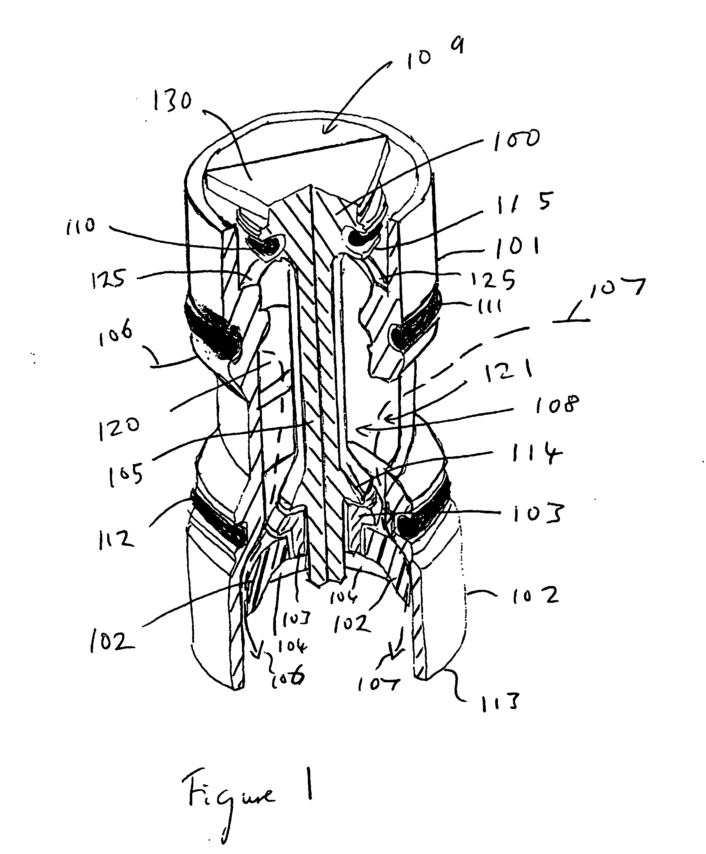

Figure 1 shows a prior art design of valve, in which a brass or plastic valve member 100 is contained within a brass housing 101. The valve has two inlets 120, 121 and two outlets 109, 113. The two inlets are used for hot and cold water. The path of the water, with the valve member 100 in the position shown, is indicated by arrows 106 and 107. The inlets 120,121 access a common channel outside the housing with hot and cold water fed to the channel, so that mixed hot and cold water enters the housing, followed by further mixing inside the housing. The bottom outlet 113 is for connection to a spray unit and the top outlet 109 is for connection to a nozzle or spout. The valve member 100 is shaped in the form of a stem 105 with a piston 115 on the top end and a piston element 114 on the bottom end. The top piston 115 also acts as a closure element for the outlet 109 to the spout.

The housing just below the top piston 115 is shaped with a ledge 125 on which the piston 115 rests in order to close off the spout outlet 109. An O-ring seal 110 is located on the valve member 100 just above the top piston 115, allowing the nozzle outlet 109 to be sealed shut when the valve member 100 is pushed downwards. On the end of the valve member 100, next to the top piston 115, is a triangular shaped guide 130 which guides the upper part of the valve member 100 within the housing 101 to minimise vibration. The effect of the triangular shape is to give a larger cross section to the waterway than, for example, a square shape. At the bottom of the valve, a rubber cup washer 102 is held in position between a bush 103 and a clip 104. A lower piston is formed comprising both the bottom piston element 114 and the rubber cup washer 102. The rubber cup washer effectively increases the area of the bottom piston beyond that of the bottom piston element 114 alone. Thus, the effective cross-section area of the bottom piston is larger than of the top piston 115. The flow of fluid to the spray is restricted by having to pass around the outer edge of the rubber cup washer 102. On the outside of the housing are O-ring seals 111, 112 to allow sealed connections to be made to the spout and spray outlets, such that the outflow from these outlets can be isolated from each other and from the inlets. The entire housing fits within a cavity in a body of a faucet system. The central portion of the housing 101 acts as a pressure chamber 108.

In operation, hot 106 and cold 107 water come into the pressure chamber 108. With the spray unit closed water will not flow through outlet 113. The faucet spout (connected to outlet 109) is always open so water can flow through that. Thus there is a pressure differential on the upper piston 115, but not on the lower piston. The pressure of the water in the pressure chamber 108 thus forces the valve member 100 upwards towards outlet 109, so that water flows through the outlet 109. When the spray unit is opened, water can flow through outlet 113, and so there is now a pressure differential across both pistons 114,115. Due to the lower piston having a larger surface area than the upper piston 115, the downward force (towards outlet 13) is greater than the upward force (towards outlet 109). The valve member 100 therefore moves downwards in the housing 101, closing off the water supply to the nozzle, and causing the water to force past the rubber cup washer 102. It will be appreciated that when we refer to 'upwards' and 'downwards' this refers to the direction of the outlets 109,113. In use, the housing 101 could be mounted in any orientation.

Figure 2 shows a sectional view of the diverter valve of Figure 1 located within an outer body 126 of a tap or faucet. A mixing chamber 122 is provided in the outer body 126 in which the hot and cold water partially mix before entering the valve. Mixing is then completed inside the pressure chamber 108. The lower end of a top nozzle 123 is shown fluidly connected to outlet 109. A channel 124 connects with outlet 113 and leads to a spray unit (not shown).

The valve of figures 1 and 2 operates in a range between 1 bar and 6 bar. Above 6 bar, there is a tendency for leakage from the spout when diverted to spray, especially with hot water. This is due to the lip of the rubber cup washer 102 softening and being dragged inwards by the flow of water. A pressure drop occurs in the central portion of the housing 108, and thus some of the closing force on the nozzle seal 110 is lost. The valve of the invention has been designed to avoid this problem, and also to incorporate a simple mechanism to reduce knocking.

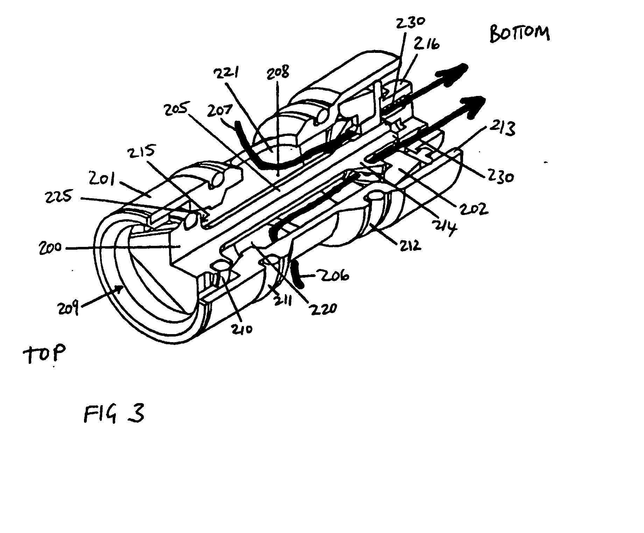

Figure 3 shows a valve according to a first embodiment of the invention. The arrangement is generally similar to the arrangement of Figures 1 and 2. The rubber cup washer 202 has been inverted to trap the water and form a seal between the outer lip of the washer 202 and the housing 201. Again, the rubber cup washer 202 and the lower piston element 214 together form a lower piston, with larger effective cross section than the top piston 215.

The valve has a central waterway comprising several channels 219 through which the flow of water is routed to a standard flow regulator 216 that restricts the flow to a substantially constant rate over a range of water pressure. This results in an increase in pressure in the pressure chamber 208, producing a much improved seal on the nozzle. The valve of the invention works between 1 bar and 10 bar. An additional beneficial effect is that the pressure of the water pushes and locks the cup washer 202 against the inside of the housing 201, reducing the tendency for the valve member 200 to shuttle back and forth, hence reducing the chance of knocking.

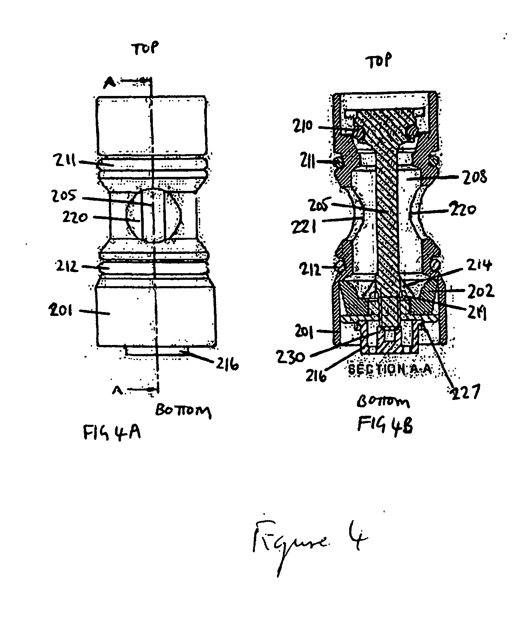

Figure 4A shows a side view of the valve of the first embodiment. A sectional view along line A-A is given in figure 4B. The structure of the flow regulator 216 can be seen, where channels 230 allow fluid to pass through at a controlled rate. The flow regulator 216 is snapped into place in the housing 201 by forcing it through a tapered die 227.

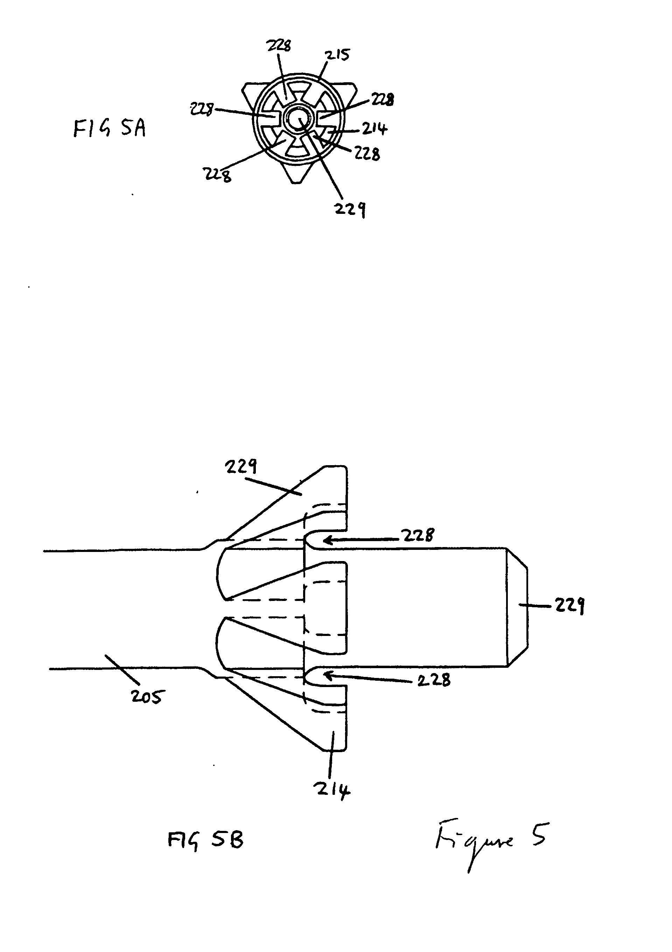

Figure 5 shows more detail of the channels through the lower piston. Figure 5A shows a bottom view of the valve member, wherein six channels 228 are formed through the lower piston element 214. The edges of the top piston 215 can be seen behind the bottom piston element 214. The lower end 229 of the valve member can be seen in the centre of the figure. Figure 5B shows a side view of the lower piston element 214. The six channels 228 extend through the tapered piston surface 229.

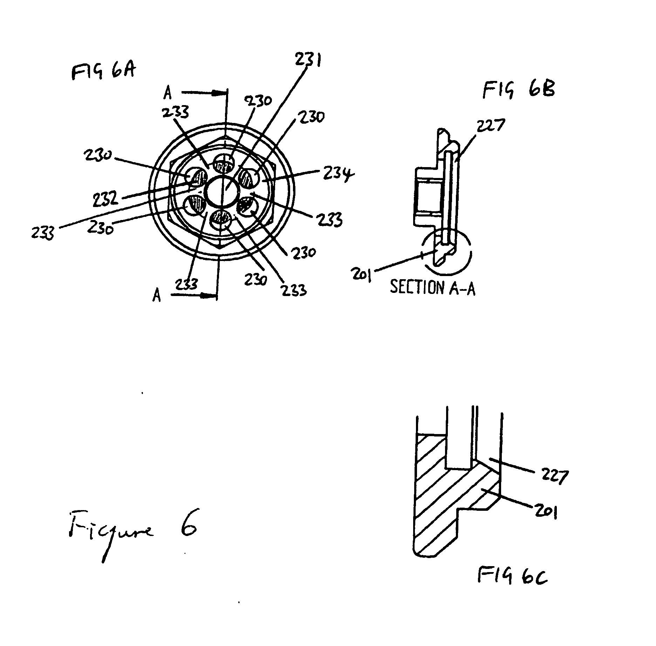

Figure 6 shows the flow regulator in more detail. Figure 6A gives a rear view, showing the six outlet channels 230 in the body 234 of the flow regulator. The flow regulator has a central pillar 231, one end of which is fixed to the body 234 of the flow regulator. The other end of the central pillar 231 has a splayed shape, enabling the central pillar 231 to retain an O-ring 232 looped around it. The O-ring 232 is made of an elastic material. When the pressure in the waterway is increased, the O-ring 232 is forced against the restricting bars 233 surrounding the outlet channels 230 in the body 234 of the flow regulator. The higher the pressure, the more the O-ring 232 becomes flattened, thus progressively reducing the size of the waterway. In this way, a constant flow of water is maintained.

Figure 6B shows a section along line A-A of figure 6A. The flow regulator 216 is attached to the housing 201 by a snap fastening means comprising a tapered die 227. Figure 6C shows this snap fastening means in more detail.

The embodiment of Figures 3 to 6 functions in the same general manner as the prior art embodiment of Figures 1 and 2, with the valve moving to close off the outlet 209 when the spray nozzle is opened. Water in chamber 208 then flows through channels 230 to the spray outlet. When the spray outlet is closed, valve member 200 moves towards nozzle outlet 209, opening the flow channel through to the faucet nozzle.

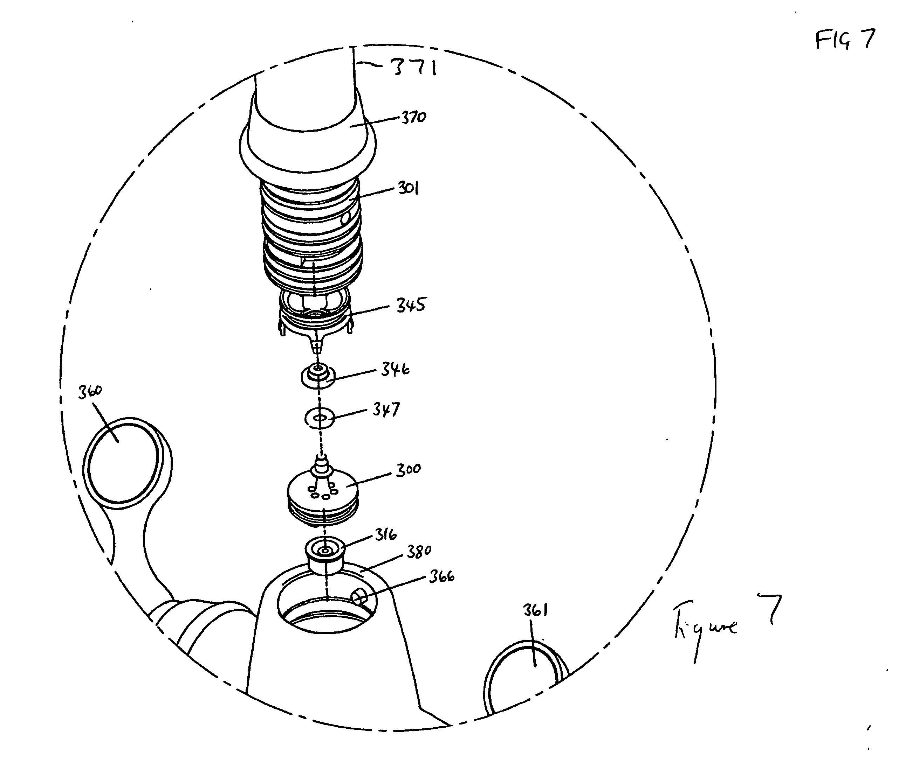

Figures 7 to 18 show a second embodiment of the invention, in which the valve housing is integrated with the spout of the faucet. As shown in figure 7, the valve assembly comprises an outer housing 301 which is attached to the inlet end 370 of the spout 371. In this embodiment, the outer housing 301 is soldered to the spout with a solder ring placed in a groove in the outer housing 301. The solder joint is concealed by a decorative ring held in place by an O-ring.

An upper valve housing part 345 is inserted into the outer housing 301, and sealed against it using an O-ring. A guide plate 346 and seating O-ring 347 are fitted into a channel 365 (Figure 9) in the upper valve housing 345. The end of the valve member 300 is fastened to the guide plate 346. A flow regulator 316, of similar design to the flow regulator 216 of the first embodiment, is positioned against the lower part of the valve member 300.

The lower part of the outer housing 301, containing the valve assembly, is fixed in position inside the faucet body 380, for example, by using a grub screw 366.

The individual parts of the valve assembly are shown in more detail in figures 8 to 11. Figures 8A to 8E show the valve member 300, which comprises a small upper piston 315, a larger lower piston 314 and a stem 305 joining the two pistons. The upper piston 315 has a guide pin 390 attached to its upper surface, which is for engaging with the guide plate 346. The guide plate 346 snap fastens on to the guide pin 390. The valve member 300 has a hollow 394 on the lower surface of the lower piston 314, into which the flow regulator 316 is inserted. The lower piston 314 has a number of holes 391, spaced evenly in a circular pattern around its central axis 392. These holes are positioned such that when the flow regulator 316 is positioned inside the lower piston 314, the holes 391 in the lower piston 314 will align with the holes of the flow regulator 316. Two hooked projections 393 are positioned beside the hollow 394. These allow easy removal of the valve member 300 from the outer housing 301, e.g. during maintenance of the valve assembly, by levering the valve member 300 out using a screwdriver inserted against one of the hooked projections 393.

Figures 9A to 9E show the upper valve housing 345 on enlarged scale. It has a channel 365, running though it to allow water to pass through into the spout when the valve is open. The channel has a circumferential lip 367 on the bottom part of its inner surface. In operation, the upper piston 315 of the valve member 300 is located inside the channel 365, and presses downwards against the lip 367 to seal off the channel 365 when the valve is in a closed position.

Figures 10A and 10B show the guide plate 346. This has a central channel 396, into which the pin 390 of the valve member is inserted. The guide plate 346 also has a lip 395 protruding upwardly from the circumference of its top surface. The seating O-ring 347 (Figure 7) is positioned against the guide plate 346, and against the inner circumference of the lip 395.

Figures 11A to E show the outer housing 301. The lower part of the outer housing 301 (as viewed in Figure 11C) accommodates the upper valve housing 345 and the valve member 300. The lower part of the outer housing 301 acts as a pressure chamber 399 for the valve assembly. Hot and cold water enter the pressure chamber via side inlets 352, 353. The outer housing 301 has a barrier 350 separating its lower and upper parts. The upper valve housing 345 is seated against the lower surface of the barrier 350. The top part of the outer housing 301 is attached to the spout 371 and any water flowing into the top part passes through and out of the spout 371. The barrier 350 contains a series of holes 354 (Figure 11B) through which the hot/cold water mixture may pass when the valve is in an open position. The barrier 350 also contains a separate central channel 398 which runs in a horizontal direction, and connects has a separate central outlet 357 to the spout 371. Filtered water may flow through this channel 398, by-passing the valve system, and exiting into the spout 371. The outer housing 301 has a series of circumferential grooves 397 around its outer surface, which can each accommodate an O-ring in order to seal the outer housing 301 against the inside of the faucet assembly 380. Faucets delivering hot, cold and filtered water are well known and described, for example, in EP-A-501989

Figure 12 shows an underneath view of the faucet assembly. The faucet assembly has three inlet pipes - a hot water inlet 381, a cold water inlet 382, and a filtered water inlet 383. Each inlet has a control valve 360, 361, 362 associated with it, to control the flow of water. The faucet assembly also has an outlet pipe 384 running through it. This outlet leads to the spray. When the spray is opened, hot and cold water which have been mixed together in the valve assembly are diverted to this outlet 384. When the spray is closed, all the water passes out via the spout 371. The clamp plate 363 and clamp nut 364 used to fix the faucet to a surface are also shown.

Figures 13A to 13E show side views and cross sectional views of the faucet assembly, and figure 13F shows a base view. Figure 13C corresponds to cross section A-A on figure 13B, and figure 13D corresponds to cross section B-B. The housing or spaces for the hot 385, cold 386 and filtered 387 water valves are shown. Each space 385, 386, 387 is connected to one of the three inlet channels 381, 382, 383. The hot and cold water valve spaces 385, 386 have outlets aligned to lead to the pressure chamber of the outer housing 301. The filtered water valve space 387 has an outlet aligned to lead to the by-pass channel 398 within the outer housing 301.

The faucet assembly also has a hole 368 into which a grub-screw may be inserted, in order to firmly attach the faucet assembly and the outer housing 301 together.

Figure 14 shows a perspective view of the valve assembly when fitted inside the faucet assembly 380. Figure 15 shows an enlarged perspective view of the valve assembly, in which the structures of the valve parts are more clearly shown.

The paths taken by the cold water 307 and the filtered water 355 are shown. The cold water enters the system through the inlet pipe 382 in the faucet assembly 380, and then passes through the cold water valve 361, which controls its flow. It then enters the pressure chamber 399 via the side inlet 353. Hot water enters the pressure chamber 399 by a second similar route (valve 360). Inside the pressure chamber 399, the hot and cold water mix together. They then exit either by the top exit, to the spout, or by the bottom exit, to the spray, depending on the position of the valve. When the spray outlet is closed, the hot/cold water mixture flows past the top piston 315 and exits to the spout via the channels 354 in the outer housing. When the spray is open, the valve member 300 is forced downwards. This is due to the fact that the bottom piston has a larger surface area than the top piston, so when both pistons have a differential pressure across them, the downward force is greater than the upward force. The upper piston 315 is forced downwards. The guide plate 346, which is fixed to the upper piston 315, is also forced downwards towards the upper housing 345, compressing the O-ring 347 to provide a seal, preventing water from flowing to the spout. The seal can withstand pressures of up to 8 bar. Instead of passing through the spout, the water passes through the channels 391 in the lower piston 314, and through the flow regulator 316 to exit via the spray unit. The flow regulator 316 prevents the water from leaving the pressure chamber 399 too quickly, so that the high pressure can be maintained inside the pressure chamber 399. There is a certain amount of leakage around the sides of the piston, but this is minimised by having the piston and the outer housing machined to high tolerance. There is also preferably a groove in the piston to minimise the noise at higher pressures.

The filtered water 355 does not pass through the valve. It enters the faucet assembly 380 via inlet pipe 383, and its flow is controlled by faucet 362. It then flows through a channel 356 in the faucet assembly which by-passes the valve. The spout has an inner tube 374 within it, and the filtered water passes out through this inner tube 374. It does not, therefore mix with the hot/cold water inside the spout 371. In this embodiment of the invention, there is no pathway by which the filtered water may exit via the spray.

Figure 16 shows a perspective view of the spout 371 connected to the faucet assembly. The spout has an end cap 375 comprising a channel through which the inner pipe 374 passes. The end cap 375 also has a series of holes 359 to allow the hot/cold water mixture to exit from the spout 371.

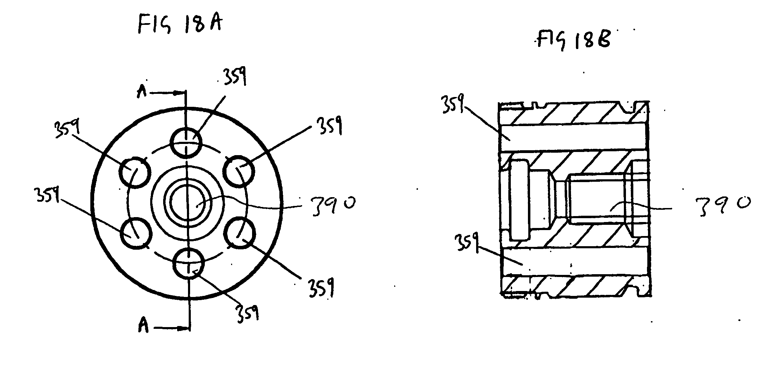

Figure 17A shows a side cross sectional view of the spout. Figure 17B shows a front view. The end cap 375 and valve assembly can be seen. Figure 18 shows a cross sectional view of the end cap 375, with the channels for the hot/cold water mixture, and the central channel 390 for the filtered water.

## Claims

1. A diverter valve comprising
a housing (201,301) having an inlet (220,221;352,353), a first outlet (209,354) and a second outlet (213),
a valve element (200,300) mounted in said housing, moveable between a closed position and an open position with respect to the first outlet (209,354),
a piston means (202,214,215;305,314) for moving said valve element (200,300), with said piston means being responsive to pressure differential between said second outlet and said inlet such that when a lower pressure exists at said second outlet, said piston means (214,314) moves said valve element (200,300) to said closed position, and
a flow regulator (216,316) adapted to regulate the flow through the second outlet, such that as the pressure in the housing (201,301) increases, the restricting effect on the flow by the flow regulator (216,316) increases, and as the pressure in the housing decreases, the restricting effect on the flow by the flow regulator decreases
the flow regulator (216,316) being positioned downstream of said piston means (202,214,215;305,314) with respect to the flow to the second outlet (213), **characterised in that** said piston means (202,214,215;305,314) forms a seal with a housing wall accommodating said piston means and a channelling means (228,391) is provided for water to flow through said piston means to said flow regulator (216,316).

2. A diverter valve as claimed in claim 1, wherein said flow regulator (216,316) comprises a variable sized flow channel, the size of the flow channel decreasing as the pressure in the housing increases, and the size of the flow channel increasing as the pressure in the housing decreases.

3. A diverter valve as claimed in claim 1 or claim 2, wherein said piston means comprises a first piston (214,202;314) and a second piston (215,315) wherein the first piston is responsive to pressure differential between said second outlet and said inlet, the second piston is responsive to pressure differential between said first outlet and said inlet, and the first piston (202,214;315) has a larger effective cross-section area than the second piston (215,315).

4. A diverter as claimed in claim 3, wherein the first piston comprises a rubber cup washer (202).

5. A diverter valve as claimed in claim 4, wherein the rubber cup washer (202) is in an inverted position, so that in use a periphery of said cup washer presses against said housing wall.

6. A diverter valve as claimed in claim 3, 4 or 5, wherein the second piston (215;315) provides closure means for the first outlet.

7. A diverter valve as claimed in claim 6, wherein said housing is shaped to have a rim against which the second piston presses while closing the first outlet.

8. A diverter valve, as claimed in any one of claims 1 to 7, wherein said housing is comprised of an outer part (301), and an inner part (345), which fits inside said outer part.

9. A diverter valve as claimed in any one of claims 1 to 8, wherein sealing means is provided to allow the first outlet to be sealed shut when the valve member is in said second position.

10. A diverter valve as claimed in claim 1, wherein said channelling means comprises one or more channels (228;391) running through the first piston.

11. A diverter valve as claimed in claim 10, wherein the first piston has 6 channels arranged in a hexagonal pattern, running through it parallel to its axis.

12. A diverter valve, as claimed in any one of claims 1 to 11, wherein leakage prevention means (202) are provided for preventing fluid leakage from the second exit by any other route than through the flow regulator.

13. A diverter valve, as claimed in claim 12 when dependent on claim 4 or 5, wherein said rubber cup wishes provides said leakage prevention means.

14. A diverter valve, as claimed in any one of claims 1 to 13, wherein said housing (201,301) has a second inlet.

15. A diverter valve as claimed in any one of claims 1 to 14, wherein the first piston has a tapered front surface.

16. A diverter valve, as claimed in any one of claims 1 to 15, comprising sealing means associated with said outlets for allowing isolation of said outlets from each other and from said inlets, when said outlets are connected to spout and spray units.

17. A diverter valve as claimed in any one of claims 1 to 16, wherein said housing (301) comprises an isolated channel (398) with an inlet and an outlet (357), the interior of said channel (398) being isolated from the interior of the diverter valve.

18. A diverter valve assembly, comprising an outer body (380), the diverter valve of any one of claims 1 to 18, a mixing chamber in the outer body (380) connected to the valve inlet, outer body inlets connected to said mixing chamber, and outer body outlets connected to the valve outlets.

19. A diverter valve assembly comprising a diverter valve as claimed in any one of claims 1 to 18, and a spout (371) connected to the first outlet, wherein said housing (301)is attached to said spout (371).

20. A diverter valve assembly, as claimed in claim 19, wherein said housing (301) is integral with said spout (371).

21. A diverter valve assembly, comprising a diverter valve as claimed in claim 17, and a spout (371) connected to the first outlet, wherein said housing (301) is attached to said spout (371), and wherein said outlet (357) of said isolated channel (398) is also connected to said spout (371).

22. A diverter valve assembly as claimed in claim 21, wherein said spout (371) comprises an outer tube and an inner tube (374), and wherein said first outlet is connected to the outer tube and said outlet (357) of said isolated channel (398) is connected to the inner tube (374).

23. A tap including a diverter valve as claimed in any one of claims 1 to 17, and including a channel (398,374) for filtered water, said channel being isolated from said diverter valve.

24. A tap including a diverter valve as claimed in anyone of claims 1 to 17, wherein two different fluid conduits enter the valve, one by each inlet, and the fluids mix together inside the housing.

25. A tap as claimed in claim 24, wherein the two inlets are lined together outside the valve housing.

26. A tap as claimed in claim 24 or 25, wherein the two fluids are hot water and cold water.

27. A tap, as claimed in claim 24, 25, or 26, wherein the second outlet is linked to a spray unit, and the first outlet is linked to a spout (371).

28. A tap, as claimed in any one of claims 24 to 27, wherein said tap further comprises an inlet for filtered water and an outlet for filtered water, said inlet and outlet for filtered water being isolated from said diverter valve.

29. A tap including a diverter valve as claimed in claim 17, wherein said tap has an inlet which is connected to said isolated channel (398), and said tap has an outlet (374) which is connected to said isolated channel, wherein said isolated channel remains isolated from said diverter valve.

30. A tap as claimed in claim 29, wherein said isolated channel is connected to a filtered water inlet.

31. A diverter valve assembly including the diverter valve of claim 3 and further comprising:
a housing insert (345) adapted to be received in a valve housing and providing a seat for a seal (347);
the valve element (300) being movable relative to the insert (345), the valve element extending through an aperture in the insert (345) and carrying the seal (347) at one end of the valve element (300) to one side of the seat to form the second piston (315),
the other end of the valve element (300) having an enlarged surface to the other side of the seat to form the first piston (314) and the channelling means comprising apertures (391) in the enlarged surface for the flow of water through the enlarged surface.

## Patentansprüche

1. Umschaltventil, umfassend:
ein Gehäuse (201, 301), das einen Einlass (220, 221; 352, 353), einen ersten Auslass (209, 354) und einen zweiten Auslass (213) aufweist;
ein in das Gehäuse eingebautes Ventilelement (200, 300), das sich in Bezug auf den ersten Auslass (209,354) zwischen einer geschlossenen Position und einer geöffneten Position bewegen lässt;
eine Kolbeneinrichtung (202,214,215;305,314) zum Bewegen des Ventilelementes (200,300), wobei die Kolbeneinrichtung auf die Druckdifferenz zwischen dem zweiten Auslass und dem Einlass so reagiert, dass bei Vorhandensein eines niedrigeren Druckes am zweiten Auslass, die Kolbeneinrichtung (214, 314) das Ventilelement (200, 300) zur geschlossenen Position bewegt; und
einen Durchflussregler (216, 316), der zum Regeln des Durchflusses durch den zweiten Auslass so ausgelegt ist, dass in dem Maße, wie der Druck im Gehäuse (201,301) ansteigt, die drosselnde Wirkung auf den Durchfluss durch den Durchflussregler (216, 316) zunimmt, und in dem Maße, wie der Druck im Gehäuse absinkt, die drosselnde Wirkung auf den Durchfluss durch den Durchflussregler abnimmt,
wobei der Durchflussregler (216, 316) in Bezug auf den Durchfluss zum zweiten Auslass (213) stromabwärts von der Kolbeneinrichtung (202, 214, 215; 305, 314) angeordnet ist, **dadurch gekennzeichnet, dass** die Kolbeneinrichtung (202, 214, 215; 305, 314) eine Dichtung mit einer Gehäusewand, die zur Unterbringung der Kolbeneinrichtung dient, bildet und eine Kanalbildungseinrichtung (228,391) bereitgestellt wird, damit Wasser durch die Kolbeneinrichtung zum Durchflussregler (216, 316) fließen kann.

2. Umschaltventil nach Anspruch 1, bei dem der Durchflussregler (216, 316) einen Durchflusskanal variabler Größe umfasst, wobei die Größe des Durchflusskanals abnimmt, in dem Maße, wie der Druck im Gehäuse ansteigt, und die Größe des Durchflusskanals zunimmt, in dem Maße, wie der Druck im Gehäuse absinkt.

3. Umschaltventil nach Anspruch 1 oder Anspruch 2, bei dem die Kolbeneinrichtung einen ersten Kolben (214, 202; 314) und einen zweiten Kolben (215, 315) umfasst, wobei der erste Kolben auf die Druckdifferenz zwischen dem zweiten Auslass und dem Einlass reagiert, der zweite Kolben auf die Druckdifferenz zwischen dem ersten Auslass und dem Einlass reagiert und der erste Kolben (202, 214; 315) eine größere effektive Querschnittsfläche als der zweite Kolben (215, 315) aufweist.

4. Umschaltventil nach Anspruch 3, bei dem der erste Kolben eine Gummitellerscheibe (202) umfasst.

5. Umschaltventil nach Anspruch 4, bei dem sich die Gummitellerscheibe (202) in einer konisch umgekehrten Lage befindet, so dass im Einsatz ein Umfangsrand der Tellerscheibe an die Gehäusewand drückt.

6. Umschaltventil nach Anspruch 3, 4 oder 5, bei dem der zweite Kolben (215; 315) Verschlussmittel für den ersten Auslass bereitstellt.

7. Umschaltventil nach Anspruch 6, bei dem das Gehäuse so geformt ist, dass es einen Rand aufweist, gegen den der zweite Kolben beim Verschließen des ersten Auslasses drückt.

8. Umschaltventil nach einem der Ansprüche 1 bis 7, bei dem das Gehäuse aus einem Außenteil (301) und einem Innenteil (345), das in das Außenteil passt, besteht.

9. Umschaltventil nach einem der Ansprüche 1 bis 8, bei dem das Dichtmittel bereitgestellt wird, damit der erste Auslass dicht verschlossen werden kann, wenn sich das Ventilelement in der zweiten Position befindet.

10. Umschaltventil nach Anspruch 1, bei dem die Kanalbildungseinrichtung ein oder mehrere Kanäle (228; 391) umfasst, die durch den ersten Kolben laufen.

11. Umschaltventil nach Anspruch 10, bei dem der erste Kolben 6 Kanäle mit einer hexagonalen Anordnung aufweist, die durch ihn und parallel zu seiner Achse verlaufen.

12. Umschaltventil nach einem der Ansprüche 1 bis 11, bei dem Leckverhinderungsmittel (202) bereitgestellt werden, um ein Flüssigkeitsleck des zweiten Austritts über irgendeinen anderen Weg als den durch den Durchflussregler zu verhindern.

13. Umschaltventil nach Anspruch 12, falls abhängig von Anspruch 4 oder 5, bei dem die Gummitellerscheibe die Leckverhinderungsmittel bereitstellt.

14. Umschaltventil nach einem der Ansprüche 1 bis 13, bei dem das Gehäuse (201, 301) einen zweiten Einlass aufweist.

15. Umschaltventil nach einem der Ansprüche 1 bis 14, bei dem der erste Kolben eine konische Vorderfläche aufweist.

16. Umschaltventil nach einem der Ansprüche 1 bis 15, das Dichtmittel umfasst, die den Auslässen zugeordnet sind, um die Isolierung der Auslässe voneinander und von den Einlässen zu gestatten, wenn die Auslässe mit dem Auslauf und den Brauseeinheiten verbunden sind.

17. Umschaltventil nach einem der Ansprüche 1 bis 16, bei dem das Gehäuse (301) einen isolierten Kanal (398) mit einem Einlass und einem Auslass (357) umfasst, wobei der Innenraum des Kanals (398) vom Innenraum des Umschaltventils isoliert ist.

18. Umschaltventil-Baugruppe, umfassend: einen Außenkörper (380); das Umschaltventil nach einem der Ansprüche 1 bis 18; eine Mischkammer im Außenkörper (380), die mit dem Ventileinlass verbunden ist; Außenkörpereinlässe, die mit der Mischkammer verbunden sind; und Außenkörperauslässe, die mit den Ventilauslässen verbunden sind.

19. Umschaltventil-Baugruppe, die ein Umschaltventil nach einem der Ansprüche 1 bis 18 und einen Auslauf (371) umfasst, der mit dem ersten Auslass verbunden ist, wobei das Gehäuse (301) am Auslauf (371) angebracht ist.

20. Umschaltventil-Baugruppe nach Anspruch 19, bei der das Gehäuse (301) mit dem Auslauf (371) eine integrale Einheit bildet.

21. Umschaltventil-Baugruppe, die ein Umschaltventil nach Anspruch 17 und einen Auslauf (371) umfasst, der mit dem ersten Auslass verbunden ist, wobei das Gehäuse (301) am Auslauf (371) angebracht ist, und wobei der Auslass (357) des isolierten Kanals (398) ebenfalls mit dem Auslauf (371) verbunden ist.

22. Umschaltventil-Baugruppe nach Anspruch 21, bei der der Auslauf (371) ein äußeres Rohr und ein inneres Rohr (374) umfasst, und bei der der erste Auslass mit dem äußeren Rohr verbunden ist und der Auslass (357) des isolierten Kanals (398) mit dem inneren Rohr (374) verbunden ist.

23. Hahn, der ein Umschaltventil nach einem der Ansprüche 1 bis 17 und einen Kanal (398, 374) für gefiltertes Wasser umfasst, wobei der Kanal vom Umschaltventil isoliert ist.

24. Hahn, der ein Umschaltventil nach einem der Ansprüche 1 bis 17 umfasst, wobei zwei verschiedene Flüssigkeitsleitungen in das Ventil eintreten, eine an jedem Einlass, und die Flüssigkeiten sich zusammen im Gehäuse mischen.

25. Hahn nach Anspruch 24, bei dem die zwei Einlässe außerhalb des Ventilgehäuses zusammen in einer Linie angeordnet sind.

26. Hahn nach Anspruch 24 oder 25, bei dem die zwei Flüssigkeiten heißes Wasser und kaltes Wasser sind.

27. Hahn nach Anspruch 24, 25 oder 26, bei dem der zweite Auslass mit einer Brauseeinheit gekoppelt und der erste Auslass mit einem Auslauf (371) gekoppelt ist.

28. Hahn nach einem der Ansprüche 24 bis 27, bei dem der Hahn außerdem einen Einlass für gefiltertes Wasser und einen Auslass für gefiltertes Wasser umfasst, wobei der Einlass und der Auslass für gefiltertes Wasser vom Umschaltventil isoliert sind.

29. Hahn, der ein Umschaltventil nach Anspruch 17 umfasst, wobei der Hahn einen Einlass aufweist, der mit dem isolierten Kanal (398) verbunden ist, und der Hahn einen Auslass (374) aufweist, der mit dem isolierten Kanal verbunden ist, wobei der isolierte Kanal vom Umschaltventil isoliert bleibt.

30. Hahn nach Anspruch 29, bei dem der isolierte Kanal mit dem Einlass für gefiltertes Wasser verbunden ist.

31. Umschaltventil-Baugruppe, die das Umschaltventil nach Anspruch 3 und außerdem Folgendes umfasst:
ein Gehäuseeinsatzstück (345), das für die Aufnahme in einem Ventilgehäuse ausgelegt ist und einen Sitz für eine Dichtung (347) bereitstellt;
wobei das Ventilelement (300) sich relativ zum Einsatzstück (345) bewegen lässt und das Ventilelement sich durch eine Öffnung in das Einsatzstück (345) erstreckt und die Dichtung (347) an einem Ende des Ventilelementes (300) zu einer Seite des Sitzes transportiert, um den zweiten Kolben (315) zu bilden;
wobei das andere Ende des Ventilelementes (300) eine vergrößerte Fläche zur anderen Seite der Dichtung aufweist, um den ersten Kolben (314) zu bilden und die Kanalbildungseinrichtung Öffnungen (391) in der vergrößerten Fläche für den Durchfluss des Wassers durch die vergrößerte Fläche umfasst.

## Revendications

1. Inverseur comprenant
un boîtier (201, 301) possédant une entrée (220, 221; 352, 353), une première sortie (209, 354) et une seconde sortie (213),
un élément de soupape (200, 300) monté dans ledit boîtier, mobile entre une position fermée et une position ouverte par rapport à la première sortie (209, 354),
un moyen formant piston (202, 214, 215; 305, 314) pour déplacer ledit élément de soupape (200,300), ledit moyen formant piston étant sensible à une différence de pression entre ladite seconde sortie et ladite entrée de sorte que lorsqu'une pression inférieure existe au niveau de ladite seconde sortie, ledit moyen formant piston (214, 314) déplace ledit élément de soupape (200, 300) à ladite position fermée, et
un régulateur de débit (216, 316) adapté pour réguler le débit à travers la seconde sortie, de sorte qu'à mesure que la pression dans le boîtier (201, 301) augmente, l'effet réducteur sur le débit réalisé par le régulateur de débit (216, 316) augmente et à mesure que la pression dans le boîtier diminue, l'effet réducteur sur le débit réalisé par le régulateur de débit diminue,
le régulateur de débit (216, 316) étant positionné en aval dudit moyen formant piston (202, 214, 215; 305, 314) par rapport à l'écoulement vers la seconde sortie (213), **caractérisé en ce que** ledit moyen formant piston (202, 214, 215; 305, 314) forme un joint d'étanchéité avec une paroi de boîtier logeant ledit moyen formant piston et un moyen de canalisation (228, 391) est prévu pour que l'eau s'écoule à travers ledit moyen formant piston vers ledit régulateur de débit (216, 316).

2. Inverseur selon la revendication 1, dans lequel ledit régulateur de débit (216, 316) comprend un canal d'écoulement de dimension variable, la dimension du canal d'écoulement diminuant à mesure que la pression dans le boîtier augmente, et la dimension du canal d'écoulement augmentant à mesure que la pression dans le boîtier diminue.

3. Inverseur selon la revendication 1 ou la revendication 2, dans lequel ledit moyen formant piston comprend un premier piston (214, 202; 314) et un second piston (215, 315), dans lequel le premier piston est sensible à une différence de pression entre ladite seconde sortie et ladite entrée, le second piston est sensible à une différence de pression entre ladite première sortie et ladite entrée, et le premier piston (202, 214; 314) possède une section transversale efficace plus grande que le second piston (215, 315).

4. Inverseur selon la revendication 3, dans lequel le premier piston comprend une rondelle à collerette en caoutchouc (202).

5. Inverseur selon la revendication 4, dans lequel la rondelle à collerette en caoutchouc (202) est dans une position inversée, de sorte qu'en utilisation, une périphérie de ladite rondelle à collerette appuie contre ladite paroi de boîtier.

6. Inverseur selon la revendication 3, 4 ou 5, dans lequel le second piston (215; 315) constitue un moyen de fermeture pour la première sortie.

7. Inverseur selon la revendication 6, dans lequel ledit boîtier est conformé de façon à avoir une bordure contre lequel appuie le second piston pendant qu'il ferme la première sortie.

8. Inverseur selon l'une quelconque des revendications 1 à 7, dans lequel ledit boîtier comprend une partie extérieure (301) et une partie intérieure (345) qui s'emboîte à l'intérieur de ladite partie extérieure.

9. Inverseur selon l'une quelconque des revendications 1 à 8, dans lequel un moyen d'étanchéité est prévu pour permettre la fermeture hermétique de la première sortie lorsque l'élément de soupape est dans ladite seconde position.

10. Inverseur selon la revendication 1, dans lequel ledit moyen de canalisation comprend un ou plusieurs canaux (218; 391) s'étendant à travers le premier piston.

11. Inverseur selon la revendication 10, dans lequel le premier piston possède 6 canaux disposés selon un motif hexagonal, s'étendant à travers celui-ci parallèlement à son axe.

12. Inverseur selon l'une quelconque des revendications 1 à 11, dans lequel un moyen anti-fuite (202) est prévu pour empêcher toute fuite de fluide de la seconde sortie par un itinéraire quelconque autre qu'en traversant le régulateur de débit.

13. Inverseur selon la revendication 12 lorsqu'elle dépend de la revendication 4 ou 5, dans lequel ladite rondelle à collerette en caoutchouc constitue ledit moyen anti-fuite.

14. Inverseur selon l'une quelconque des revendications 1 à 13, dans lequel ledit boîtier (201, 301) possède une seconde entrée.

15. Inverseur selon l'une quelconque des revendications 1 à 14, dans lequel le premier piston présente une surface avant conique.

16. Inverseur selon l'une quelconque des revendications 1 à 15, comprenant des moyens d'étanchéité associés auxdites sorties pour permettre l'isolation desdites sorties les unes des autres et desdites entrées, lorsque lesdites sorties sont raccordées à des unités de bec et de pulvérisation.

17. Inverseur selon l'une quelconque des revendications 1 à 16, dans lequel ledit boîtier (301) comprend un canal isolé (398) doté d'une entrée et d'une sortie (357), l'intérieur dudit canal (398) étant isolé de l'intérieur de l'inverseur.

18. Ensemble à inverseur comprenant un corps extérieur (380), l'inverseur selon l'une quelconque des revendications 1 à 18, une chambre de mélange dans le corps extérieur (380) raccordée à l'entrée d'inverseur, des entrées de corps extérieur raccordées à ladite chambre de mélange et des sorties de corps extérieur raccordées aux sorties d'inverseur.

19. Ensemble à inverseur comprenant un inverseur selon l'une quelconque des revendications 1 à 18, et un bec (371) raccordé à la première sortie, dans lequel ledit boîtier (301) est fixé audit bec (371).

20. Ensemble à inverseur selon la revendication 19, dans lequel ledit boîtier (301) est d'un seul tenant avec ledit bec (371).

21. Ensemble à inverseur comprenant un inverseur selon la revendication 17, et un bec (371) raccordée à la première sortie, dans lequel ledit boîtier (301) est fixé audit bec (371), et dans lequel ladite sortie (357) dudit canal isolé (398) est également raccordée audit bec (371).

22. Ensemble à inverseur selon la revendication 21, dans lequel ledit bec (371) comprend un tube extérieur et un tube intérieur (374), et dans lequel ladite première sortie est raccordée au tube extérieur et ladite sortie (357) dudit canal isolé (398) est raccordée au tube intérieur (374).

23. Robinet comprenant un inverseur selon l'une quelconque des revendications 1 à 17, et comprenant un canal (398, 374) pour de l'eau filtrée, ledit canal étant isolé dudit inverseur.

24. Robinet comprenant un inverseur selon l'une quelconque des revendications 1 à 17, dans lequel deux conduits de fluide différents entrent dans l'inverseur, un par chaque entrée, et les fluides se mélangent ensemble à l'intérieur du boîtier.

25. Robinet selon la revendication 24, dans lequel les deux entrées sont alignées l'une avec l'autre à extérieur du boîtier de soupape.

26. Robinet selon la revendication 24 ou 25, dans lequel des deux fluides sont de l'eau chaude et de l'eau froide.

27. Robinet selon la revendication 24, 25 ou 26, dans lequel la seconde sortie est reliée à une unité de pulvérisation, et la première sortie est reliée à un bec (371).

28. Robinet selon l'une quelconque des revendications 24 à 27, dans lequel ledit robinet comprend en outre une entrée d'eau filtrée et une sortie d'eau filtrée, ladite entrée et ladite sortie d'eau filtrée étant isolée dudit inverseur.

29. Robinet comprenant un inverseur selon la revendication 17, dans lequel ledit robinet possède une entrée qui est raccordée audit canal isolé (398), et ledit robinet possède une sortie (374) qui est raccordée audit canal isolé, dans lequel ledit canal isolé reste isolé dudit inverseur.

30. Robinet selon la revendication 29, dans lequel ledit canal isolé est raccordé à une entrée d'eau filtrée.

31. Ensemble à inverseur comprenant l'inverseur selon la revendication 3 et comprenant en outre:
un insert de boîtier (345) adapté pour être reçu dans un boîtier de soupape et pour constituer un siège pour un joint d'étanchéité (347);
l'élément de soupape (300) étant mobile par rapport à l'insert (345), l'élément de soupape s'étendant à travers une ouverture dans l'insert (345) et portant le joint d'étanchéité (347) à une extrémité de l'élément de soupape (300) d'un côté du siège afin de former le second piston (315),
l'autre extrémité de l'élément de soupape (300) présentant une surface élargie de l'autre côté du siège afin de former le premier piston (314) et le moyen de canalisation comprenant des ouvertures (391) dans la surface élargie pour l'écoulement de l'eau à travers la surface élargie.
